Europäisches Patentamt

(19) European Patent Office (11) Numéro de publication: **0 048 892**

Office européen des brevets **B1**

(12) **FASCICULE DE BREVET EUROPEEN**

(45) Date de publication du fascicule du brevet: **31.07.85** (51) Int. Cl.⁴: **F 16 B 12/24**

(21) Numéro de dépôt: **81107310.5**

(22) Date de dépôt: **16.09.81**

(54) **Système d'assemblage de panneaux pour meubles.**

| | |
|---|---|
| (30) Priorité: **26.09.80 FR 8020981** | (73) Titulaire: **Baroi, Stefan Ionel**<br>**8, Avenue de Miremont**<br>**CH-1206 Geneve (CH)** |
| (43) Date de publication de la demande:<br>**07.04.82 Bulletin 82/14** | |
| | (72) Inventeur: **Baroi, Stefan Ionel**<br>**8 Avenue de Miremont**<br>**CH-1206 Geneve (CH)**<br>Inventeur: **Duchenet, Bernard**<br>**50 Boulevard de la Corniche**<br>**F-74200 Thonon-Les-Bains (FR)** |
| (45) Mention de la délivrance du brevet:<br>**31.07.85 Bulletin 85/31** | |
| (84) Etats contractants désignés:<br>**AT BE CH DE GB IT LI NL SE** | |
| | (74) Mandataire: **Micheli, Michel-Pierre et al**<br>**MICHELI & CIE 118, Rue du Rhône Case Postale**<br>**47**<br>**CH-1211 Genève 6 (CH)** |
| (56) Documents cités:<br>**DE-A-2 257 090**<br>**FR-A-1 506 412**<br>**FR-A-1 529 364**<br>**FR-A-2 141 371** | |

Courier Press, Leamington Spa, England.

## Description

Pour le montage de meubles de rangement, rayonnages, bibliothèques, etc. notamment, à l'aide d'éléments préfabriqués, il est nécessaire d'une part de réduire le nombre de pièces d'assemblage et d'autre part de proposer un système aisé pour l'utilisateur qui doit réaliser l'assemblage.

Il est connu du brevet FR—A—2 141 371 un élément de liaison pour assembler des panneaux comprenant une paroi plane d'une épaisseur correspondant à la largeur d'une entaille pratiquée dans la tranche d'un panneau et des organes de guidage destinés à prendre appui sur la face desdits panneaux. Cet élément de liaison comporte une butée centrale contre laquelle vient en butée la tranche des panneaux à assembler.

La rigidité d'un tel assemblage est insuffisante et rien n'est prévu pour verrouiller les éléments de liaison aux panneaux.

Il est encore connu du brevet FR—A—1 506 412 le fait de chanfreiner les angles des tranches de panneaux à assembler. L'assemblage de ces panneaux ne s'effectue toutefois pas à l'aide d'éléments de liaison mais à l'aide d'une tige s'étendant sur toute la longueur des arêtes des panneaux munie d'organes de fixation destinés à être enfichés dans des perçages que présente la tranche des panneaux.

La présente invention a pour objet un système d'assemblage de panneaux pour la réalisation de meubles ou structures de rangement qui comporte des panneaux 1 présentant sur deux tranches 2 à assembler des entailles 3 et des pièces de liaison 7 reliant au moins deux panneaux 1, ces pièces de liaison 7 présentant une paroi plane 8 d'une épaisseur correspondant à la largeur desdites entailles 3 ainsi que des organes de guidage 9 destinés à prendre appui contre les faces des panneaux et une butée central 10 destinée à prendre appui contre les tranches 2 des panneaux, caractérisé par le fait que les angles des tranches 2 des panneaux 1 sont chanfreinés pour former des faces d'appui 4, par le fait que les faces d'appui 4 de deux panneaux 1 orthogonaux adjacents sont en contact l'une avec l'autre, et par le fait que des organes de verrouillage 12 sont introduits dans un trou 6 d'une tranche 5 de chaque panneau 1, perpendiculaire aux tranches 2 et à travers un perçage 11 d'une pièce de l'écrou 7 perpendiculaire à la paroi plane 8 de celle-ci.

Le dessin annexé illustre schématiquement et à titre d'exemple une forme d'exécution du système d'assemblage selon la présente invention.

La figure 1 est une vue en perspective d'une pièce de liaison et de quatre panneaux, seul l'un de ceux-ci étant accouplé à la pièce de liaison.

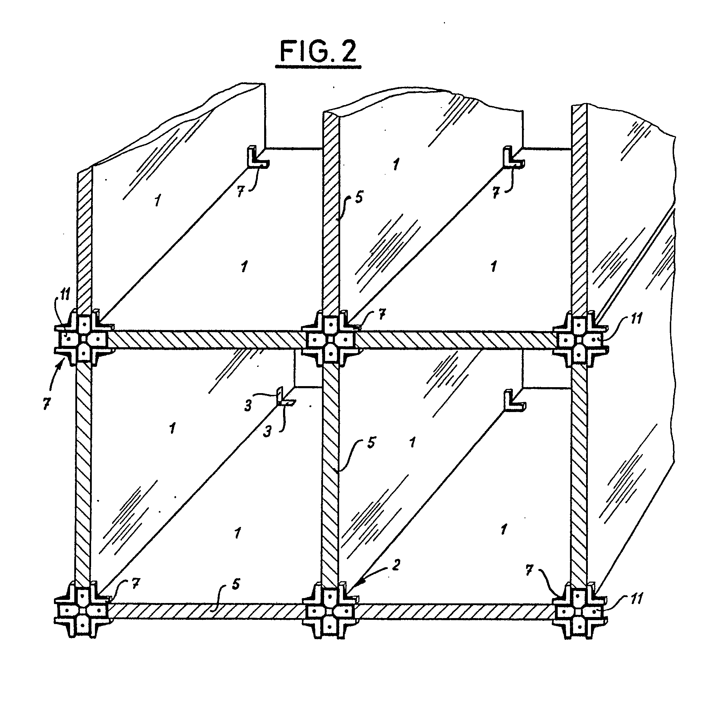

La figure 2 illustre schématiquement une structure de rangement réalisée selon le présent système.

Le système d'assemblage et de fixation de panneaux, notamment pour la réalisation de meubles de rangement, se distingue en ce que chaque panneau 1 présente sur deux de ses tranches 2 à assembler au moins deux entailles 3 s'étendant dans un plan perpendiculaire à ladite tranche 2.

Les tranches 2 des panneaux 1 munies des entailles sont chanfreinées de manière à former deux faces d'appui.

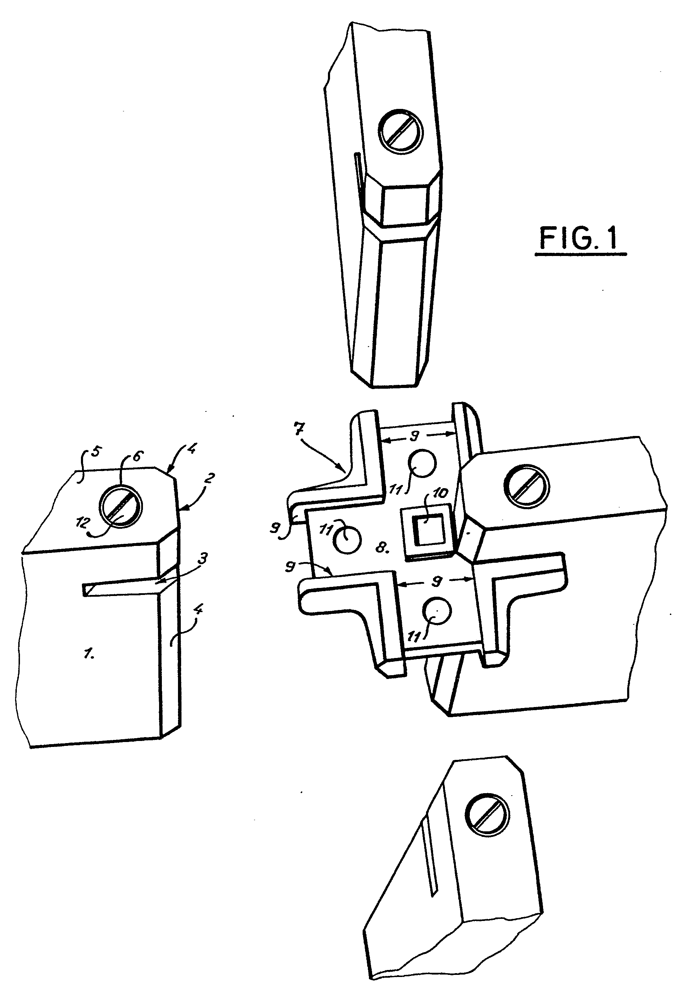

Les entailles 3 sont disposées à proximité des deux autres tranches 5 des panneaux 1. Sur la figure 1, les panneaux ne sont que partiellement illustrés, c'est pourquoi une seule entaille 3 est visible.

Un trou 6 est pratiqué dans les tranches 4 du panneau et relie cette tranche 5 à l'entaille 3 correspondante.

Le système d'assemblage comporte encore des pièces de liaison 7 comportant une paroi plane 8 dont l'épaisseur correspond à la largeur des entailles 3 ainsi que des faces de guidage 9 dont l'écartement correspond à l'épaisseur des panneaux 1. Cette pièce de liaison 7 présente donc en plan une forme générale de croix en creux. Une butée centrale 10 présente des faces latérales destinées à venir en contact avec les tranches 2 des panneaux 1.

Ces pièces de liaison 7 présentent dans l'exemple illustré des perçages il destinés à donner passage à des organes de verrouillage 12 constitués par des vis ou des goupilles par exemple.

Pour assembler les panneaux on introduit les entailles 3 des panneaux 1 sur la paroi 8 de la pièce de liaison 7 entre les parois de guidage 9 jusqu'à ce que la tranche 2 de chaque panneau entre en contact avec la butée centrale 10 d'une pièce de liaison 7. On introduit ensuite l'organe de verrouillage 12 dans le trou 6 et le perçage il pour bloquer l'assemblage.

Il faut remarquer qu'une fois assemblées les faces d'appui 4 de deux panneaux formant un angle de 90° entre-eux sont en contact l'une contre l'autre. Ceci est important car la rigidité de l'assemblage ainsi réalisé est grandement augmentée et surtout les casiers individuels de meuble de rangement obtenu sont fermés duns les angles.

Dans les bords de l'assemblage ainsi réalisé une partie des pièces de liaison 7 fait saillie et il est possible d'utiliser les perçages il de ces pièces pour fixer la structure réalisée contre un mur par exemple.

On peut également prévoir d'évider partiellement au moins la butée centrale 10 de manière à constituer des perçages permettant également la fixation de l'assemblage contre une paroi.

Les pièces de liaison 7 sont réalisées par exemple par injection en matière plastique de sorte que leur prix de revient peut être faible pour de grandes séries.

Le façonnage à effectuer sur les panneaux, chanfreins et entailles, est limité de sorte que la structure est d'un coût réduit.

Il est évident que la finition des panneaux peut varier suivant l'utilisation envisagée. Ils peuvent être en bois, laissés bruts, être peints, être plaqués, stratifiés; en verre, en métal, etc.

Le nombre réduit d'éléments du système permet un assemblage rapide et aisé pour l'utilisateur.

Il est évident que ce système d'assemblage permet de réaliser des structures démontables et évolutives ce qui très important.

Les pièces de liaison 7 peuvent présenter un trou central pour permettre la fixation sur au moins une paroi de meuble assemblé.

De plus des pièces de liaison en forme de T ou de L peuvent être prévues pour la fixation de trois, respectivement deux panneaux. Ces pièces sont utilisées notamment sur le côté et les angles des meubles de rangement réalisés.

On peut également prévoir des pièces de liaison cruciforme dont la paroi centrale d'une branche serait supprimée. De cette façon il est possible en enfilant un panneau entre les organes d'appui 9 de la branche évidée, de former un départ à 90° pour une autre portion de meuble. Des meubles d'angle peuvent ainsi être réalisés.

## Revendications

1. Système d'assemblage de panneaux pour la réalisation de meubles ou structures de rangement comportant des panneaux (1) présentant sur deux tranches (2) à assembler des entailles (3), et des pièces de liaison (7) reliant au moins deux panneaux (1), ces pièces de liaison (7) présentant une paroi plane (8) d'une épaisseur correspondant à la largeur desdites entailles (3) ainsi que des organes de guidage (9) destinés à prendre appui contre les faces des panneaux et une butée centrale (10) destinée à prendre appui contre les tranches (2) des panneaux, caractérisé par le fait que les angles des tranches (2) des panneaux (1) sont chanfreinées pour former des faces d'appui (4), par le fait que les faces d'appui (4) de deux panneaux (1) orthogonaux adjacents sont en contact l'une avec l'autre, et par le fait que des organes de verrouillage (12) sont introduits chacun dans un trou (6) d'une tranche (5) de chaque panneau (1), perpendiculaire aux tranches (2), et à travers un perçage (11) d'une pièce de liaison (7) perpendiculaire à la paroi plane (8) de celle-ci.

2. Système selon la revendication 1, caractérisé par le fait que la butée centrale (10) présente un perçage perpendiculaire à la paroi plane (8) de la pièce de liaison (7).

## Patentansprüche

1. Paneelverbindung für die Herstellung von Möbeln oder Regalbauten mit Paneelen (1), die an zwei zusammenzufügenden Kanten (2) Schlitze (3) aufweisen, und mit Verbindungsstücken (7), welche wenigstens zwei Paneele (1) verbinden, wobei diese Verbindungsstücke (7) eine ebene Wand (8) einer der Breite der Schlitze (3) entsprechenden Dicke sowie zum Abstützen an den Flächen der Paneele bestimmte Führungselemente (9) und ein zum Abstützen an den Kanten (2) der Paneele bestimmtes mittiges Anschlagstück (10) aufweisen, dadurch gekennzeichnet, daß die Winkel der Kanten (2) der Paneele (1) abgeschrägt sind, so daß sie Stützflächen (4) bilden, daß die Stützflächen (4) zweier senkrechter benachbarter Paneele (1) miteinander in Berührung stehen, und daß die Blockierungselemente (12) jeweils in ein Loch (6) eines Teiles (5) jedes Paneels (1) senkrecht zu den Kanten (2) und durch eine Bohrung (11) eines senkrecht zu seiner ebenen Wandung (8) senkrechten Verbindungsstückes (7) eingeschoben sind.

2. Paneelverbindung nach Anspruch 1, dadurch gekennzeichnet, daß das mittige Anschlagstück (10) eine zur ebenen Wand (8) des Verbindungsstückes (7) senkrechte Bohrung aufweist.

## Claims

1. Panel jointing system for the realization of furnitures or storing structures comprising panels (1) having notches (3) on two edges to be jointed, and connecting parts (7) presenting a planar wall (8) having a thickness corresponding to the width of said notches (3) as well as guiding members (9) intended to rest against the faces of the panels and a central abutment (10) intended to rest against the edges (2) of the panels, caracterized by the fact that the angles of the edges (2) of the panels (1) are chamfered to create bearing faces (4), by the fact that said bearing faces (4) of two adjacent orthogonal panels (1) are in contact the one with the other, and by the fact that locking means (12) are each located in a hole (6) of an edge (5) of each panel (1), perpendicularly to said edges (2), and through a bore (11) of a connecting part (7) perpendicularly to its planar wall (8).

2. System according to claim 1 caracterized by the fact that the central abutment (10) is provided with a bore perpendicular to the planar wall (8) of the connecting part (7).

0 048 892

FIG.1

## FIG. 2